# EUROPEAN PATENT APPLICATION

(11) **EP 4 811 332 A1**
(43) Date of publication of application: **23.09.2026**
(21) Application number: 26159529.2
(22) Date of filing: 19.02.2026
(51) Int. Cl.: G09B 7/02

(54) **PROGRAM, INFORMATION PROCESSING DEVICE, INFORMATION PROCESSING METHOD, AND LEARNING SUPPORT SYSTEM**

(30) Priority: 17.03.2025 JP 2025042219
(71) Applicant: Casio Computer Co., Ltd., Tokyo 151-8543 (JP)
(72) Inventor: Sumioka, Daiki, Hamura-shi, Tokyo, 205-8555 (JP)
(74) Representative: Grünecker Patent- und Rechtsanwälte PartG mbB

(57) **Abstract**

A program causes a computer (11) to perform an obtainment process of obtaining pieces of performance information on learners on a test created based on a predetermined learning content, and learning states of the learners about the predetermined learning content, and perform a display process of causing a display (24) to display statistical information (170A, 170B, 180A, 180B, 190) on the learners about the predetermined learning content based on the pieces of performance information and the learning states.

## Description

### BACKGROUND OF THE INVENTION

### TECHNICAL FIELD

The present disclosure relates to a program, an information processing device, an information processing method, and a learning support system.

### DESCRIPTION OF RELATED ART

Learning support systems have been used to support users' learning by displaying questions about learning contents on a display screen and receiving answers to the questions. For example, there is disclosed in JP 2020-12948 A an information processing device that displays test results, the information processing device displaying scores of students on a target test and the number of students who have incorrectly answered each question in the test.

### SUMMARY OF THE INVENTION

According to an aspect of the present disclosure, there is provided a program causing a computer to:
perform an obtainment process of obtaining pieces of performance information on learners on a test created based on a predetermined learning content, and learning states of the learners about the predetermined learning content; and
perform a display process of causing a display to display statistical information on the learners about the predetermined learning content based on the pieces of performance information and the learning states.

According to the present disclosure, test results of learners and learning states of self-learning conducted by the learners by themselves can be provided about a learning content(s).

### BRIEF DESCRIPTION OF DRAWINGS

FIG. 1 shows a configuration example of a learning support system according to an embodiment(s) of the present disclosure.
FIG. 2 shows a configuration example of a database in a storage of a server device.
FIG. 3 is a flowchart of a learning support process.
FIG. 4 is an example of a control table for determining function tabs in accordance with the type of user.
FIG. 5 is an example of a display screen for instructors.
FIG. 6 is an example of a display screen for learners.
FIG. 7 is a flowchart of a test creation process.
FIG. 8 is an example of a test creation condition setting screen.
FIG. 9 is an illustration to explain a specific example of a method of determining contents of questions on the basis of "Range of Questions", "Number of Questions", and "Order of Questions".
FIG. 10 is a flowchart of a test code issue process.
FIG. 11 is an example of a test code setting screen.
FIG. 12 is an example of a test code issued screen.
FIG. 13 is a flowchart of a test conducting process.
FIG. 14 is an example of a test code input screen.
FIG. 15 is an example of a test information screen.
FIG. 16 is an example of a test screen.
FIG. 17 is an example of a test result screen.
FIG. 18 is an example of a learning condition setting screen.
FIG. 19 is a flowchart of a performance browsing process.
FIG. 20 is a flowchart of the performance browsing process.
FIG. 21 is an example of a list-of-created-tests screen.
FIG. 22 is an example of a learner-by-learner test statistics screen in a graph form.
FIG. 23 is an example of the learner-by-learner test statistics screen in a table form.
FIG. 24 is an example of a word-by-word test statistics screen in the graph form.
FIG. 25 is an example of the word-by-word test statistics screen in the table form.
FIG. 26 is an example of a learner-by-learner self-learning statistics screen in the graph form.

### DETAILED DESCRIPTION

Hereinafter, one or more embodiments of a program, an information processing device, an information processing method and a learning support system according to the present disclosure will be described in detail with reference to the drawings. Although various limitations technically preferrable for carrying out the present disclosure are attached to the embodiments described below, the technical scope of the present disclosure is not limited to the embodiments below or illustrated examples. In the following embodiments, a learning support system is used by school students and teacher. The term "school" is not limited to regular elementary schools, junior high schools, high schools, colleges and universities, but includes vocational schools, tutoring schools, preparatory schools and so forth.

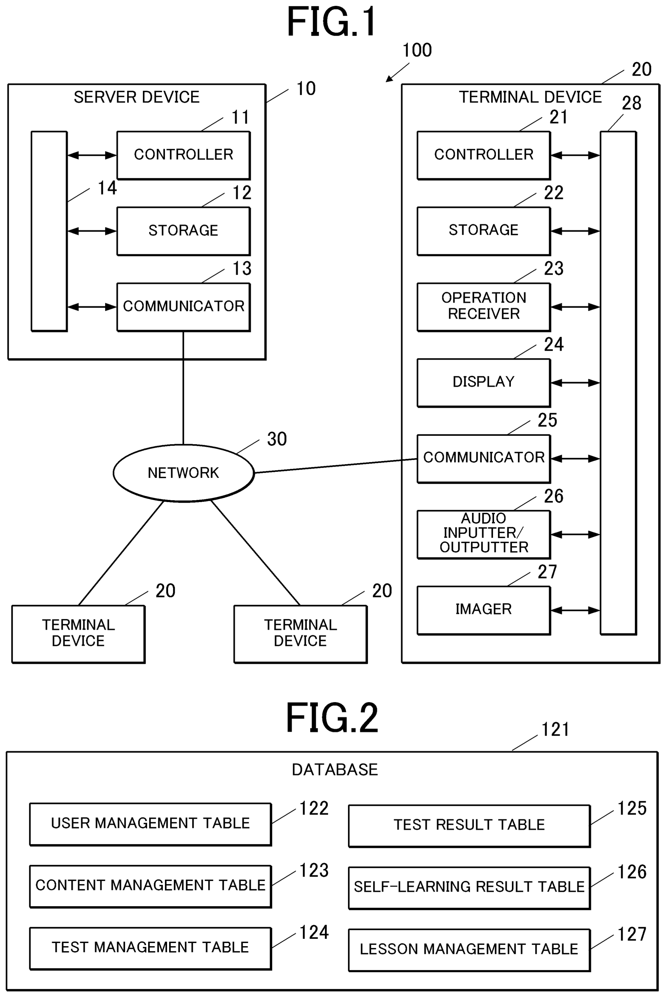

As shown in FIG. 1, a learning support system 100 includes a server device 10 (information processing device) and terminal devices 20. The server device 10 and the terminal devices 20 are connected with one another via a network 30 to perform data communications. The terminal devices 20 are used by users (students and a teacher in this embodiment). The terminal devices 20 may be personal computers, portable terminal devices, such as tablets, or mobile communications devices, such as smartphones. The number of terminal devices 20 is not specifically limited. The network 30 is a telecommunications network, such as the Internet, a wireless local area network (LAN), a wired LAN, a mobile communications network, a short-range wireless communications network, or a combination of some or all of these.

The server device 10, with its web server function, provides a learning support service or delivers an application program(s) necessary for providing a learning support service to each terminal device 20 via a browser in response to access from each terminal device 20.

The server device 10 includes a controller 11 (processor), a storage 12 and a communicator 13. These components of the server device 10 are connected with one another via a system bus 14. The controller 11 includes a central processing unit (CPU) and a random access memory (RAM), and controls each component of the server device 10. More specifically, the controller 11 reads a program(s) specified from system programs and application programs stored in the storage 12, loads it to the RAM, and performs a process among various processes in accordance with the loaded program. For example, in accordance with an execution result of an application program, the controller 11 generates a control signal, screen information and/or various resources, which will be described later, to cause a display 24 of a terminal device 20 to perform display pertaining to the execution result, and transmits the generated ones to the terminal device 20 via the communicator 13. Hereinafter, the controller 11 causing the display 24 of the terminal device 20 to display some kind of information indicates that the controller 11 transmits, to the terminal device 20, a control signal, screen information and/or various resources for the display 24 to display some kind of information, and the terminal device 20 receives, via a communicator 25, the control signal, screen information and/or various resources from the server device 10 and performs, with a controller 21, a process of causing the display 24 to display the some kind of information.

The storage 12 is composed of, for example, a hard disk drive (HDD), a solid state drive (SSD), an electrically erasable programmable read only memory (EEPROM) or the like. The storage 12 stores system programs and application programs that are executed by the controller 11, and data necessary for execution of these programs. The storage 12 is provided with a database 121 shown in FIG. 2. The database 121 includes a user management table 122, a content management table 123, a test management table 124, a test result table 125, a self-learning result table 126, and a lesson management table 127.

The user management table 122 is a table to manage user information on each user (e.g., student, teacher, etc.) who uses a learning support application provided by the learning support system 100. In the user management table 122, with respect to each user, pieces of information, such as a user ID, a password, a user name, a school, a grade, a class, an email address and a user type (student or teacher), are stored in an associated manner. The user ID is unique identification information assigned to each user and is a login ID to use the learning support application. The password is a password that is used for user authentication. The user name is a name of the user. The school, the grade and the class are those to which the user belongs. The email address is an email address that the user uses. The user type is information that indicates the role of the user and is teacher, student or the like. In the learning support system 100, teachers are instructors, and students are learners.

The content management table 123 is a table to manage learning content information on each learning content that is used in the learning support application. In the content management table 123, with respect to each learning content, pieces of information, such as a content ID and content data, are stored in an associated manner. The content ID is unique identification information assigned to each learning content. The content data is data that indicates substances of the learning content. In this embodiment, the learning content is a wordbook content. The content data of the wordbook content includes meanings (translations), example sentences and explanations of multiple words. To each word, a word number is assigned. The learning content is divided into ranges, such as pages, chapters, or the like.

The test management table 124 is a table to manage test information on each created test. In the test management table 124, with respect to each created test, pieces of information, such as a test code, a test name, test creation conditions, test contents corresponding to questions, a user ID of a creator (teacher or instructor) and a creation date, are stored in an associated manner. The test code is unique identification information assigned to each test. The test name is a name of the test. The test creation conditions are conditions specified by a creator in creating the test. The test creation conditions include a range of questions, the number of questions, order of questions, a question form, an answer time and an answer deadline. The test contents corresponding to questions include questions and their correct answers. In the case of the wordbook content, the test contents corresponding to questions can be identified by the word numbers in the wordbook content. For example, a word number is associated with a question number of each question (number indicating what number in order of questions each question is) and managed. The user ID of a creator is a user ID of a user who has created the test. The creation date is a date on which the test was created.

The test result table 125 is a table to record results of tests taken by learners. Records are added to the test result table 125 at timings at which users took tests. In the test result table 125, with respect to each test taken by each learner, pieces of information, such as a test code, a user ID of a learner, correct/incorrect information on each question and a test completion date and time, are stored in an associated manner. The test code is a test code of a target test. The user ID of a learner is a user ID of a user who has taken the test. The correct/incorrect information on each question is information indicating whether a user's answer to each question included in the test is correct. The correct/incorrect information on each question includes information to identify each question. This information to identify each question includes a question number and a word number. The test completion date and time is date and time at which the user completed the test.

The self-learning result table 126 is a table to record results of self-learning conducted by learners. Records are added to the self-learning result table 126 at timings at which users conducted self-learning. In the self-learning result table 126, with respect to each learner, pieces of information, such as a user ID of a learner, correct/incorrect information on each question and a self-learning completion date and time, are stored in an associated manner. The user ID of a learner is a user ID of a user who has conducted self-learning. The correct/incorrect information on each question is information indicating whether a user's answer to each question in self-learning is correct. The correct/incorrect information on each question includes information to identify each question. This information to identify each question includes a question number and a word number. The self-learning completion date and time is date and time at which the user completed self-learning.

The lesson management table 127 is a table to manage lesson information on each lesson. In the lesson management table 127, with respect to each lesson, pieces of information, such as a lesson ID, a user ID of a teacher and user IDs of students, are stored in an associated manner. The lesson ID is unique identification information assigned to each lesson. The user ID of a teacher is a user ID of a user who has been registered as a teacher (instructor) for the lesson. The user IDs of students are user IDs of users who have been registered as students (learners) for the lesson. For the same lesson (one lesson), user IDs of two or more students are registered.

The communicator 13 includes a network interface card (NIC) and accesses the network 30 to perform data communications with external devices.

The controller 11 obtains pieces of performance information on learners on a test created on the basis of a predetermined learning content and learning states of the learners about the predetermined learning content. The controller 11 causes the display 24 of the terminal device 20 to display statistical information about the predetermined learning content based on the pieces of performance information and the learning states. More specifically, the controller 11 generates data to cause the display 24 of the terminal device 20 to display the statistical information about the predetermined learning content based on the pieces of performance information and the learning states. The controller 11 causes only the display 24 of the terminal device 20 that is used by an instructor (teacher) to display the statistical information.

The learning states each include the number of questions worked on by each learner in the predetermined learning content and the number of correct answers given thereto by each learner. Thus, the controller 11 obtains the learning states of two or more learners. The controller 11 causes the display 24 of the terminal device 20 to display, as the statistical information on the learning states, first statistical information that includes the number of questions worked on by each learner and the number of correct answers given thereto by each learner. The controller 11 receives a setting(s) of a first condition(s) that is a condition for the learning states to be displayed. The first condition(s) includes a condition about at least one of a learning period, category information on the learners, and a learning range. The learning period of a learning state is determined on the basis of the self-learning completion date and time recorded in the self-learning result table 126. As the category information on the learners, for example, a lesson is used. The category information on a learner in a learning state is determined on the basis of the lesson ID that the user ID of the learner recorded in the self-learning result table 126 is associated with in the lesson management table 127. The learning range of a learning state is determined on the basis of the word numbers included in the information to identify each question. The information to identify each question is recorded in the self-learning result table 126.

The controller 11 obtains the pieces of performance information on the learners. In addition to the first statistical information, the statistical information includes, as auxiliary statistical information, at least one of second statistical information and third statistical information. The second statistical information is the pieces of performance information on the learners on the test. The third statistical information is information including the number of respondents (learners) to each question included in the test and the number of respondents (learners) who have given a correct answer(s) thereto. The controller 11 causes the display 24 of the terminal device 20 to display statistical information selected from the first statistical information and the auxiliary statistical information.

The terminal device 20 includes a controller 21, a storage 22, an operation receiver 23, a display 24, a communicator 25, an audio inputter/outputter 26 and an imager 27. These components of the terminal device 20 are connected with one another via a system bus 28. The controller 21 includes a CPU and a RAM and controls each component of the terminal device 20. More specifically, the controller 21 reads a program(s) specified from system programs and application programs stored in the storage 22, loads it to the RAM, and performs a process among various processes in accordance with the loaded program. The programs stored in the storage 22 include a browser. The browser is a software application that obtains various resources, such as HTML, JavaScript, CSS and images, from the server device 10 (web server), and analyzes and executes these files to generate and display screens. The user of the terminal device 20 uses the learning support service that is provided by the server device 10 via the browser in the form of web applications. For example, the controller 21 causes, via the browser, the communicator 25 to transmit, to the server device 10, information based on the contents of a user's input operation on the operation receiver 23, or the display 24 to display information based on a control signal, screen information and/or various resources received from the server device 10.

The storage 22 is composed of, for example, an HDD, an SSD, an EEPROM or the like. The storage 22 stores system programs and various programs, such as a browser, which are executed by the controller 21, and data necessary for execution of these programs. The programs may be downloaded from an external web server to the storage 22 via the network 30 and the communicator 25.

The operation receiver 23 includes an operation inputter including a keyboard, a touchscreen, a mouse, and/or the like. The operation receiver 23 receives user's input operations and outputs pieces of operation information corresponding to the input operations to the controller 21. The display 24 is composed of a liquid crystal display (LCD), an electro-luminescence (EL) display or the like, and displays various pieces of information in accordance with pieces of display information (display instructions) from the controller 21. The communicator 25 includes one or both of a wired communications module, such as an NIC, and a wireless communications module, and accesses the network 30 to perform data communications with external devices.

The audio inputter/outputter 26 includes an audio inputter including a microphone, and an audio outputter including an amplifier and a speaker. The audio inputter/outputter 26 obtains, with the audio inputter, audio signals, such as user's voice, converts them into audio data, and outputs the audio data to the controller 21. The audio inputter/outputter 26 outputs, with the audio outputter, audio based on audio data input from the controller 21. The imager 27 is a digital camera including an optical system and an imaging element, such as a charge coupled device (CCD) or a complementary metal oxide semiconductor (CMOS), and images a subject and generates and outputs image data of a still image or a moving image to the controller 21.

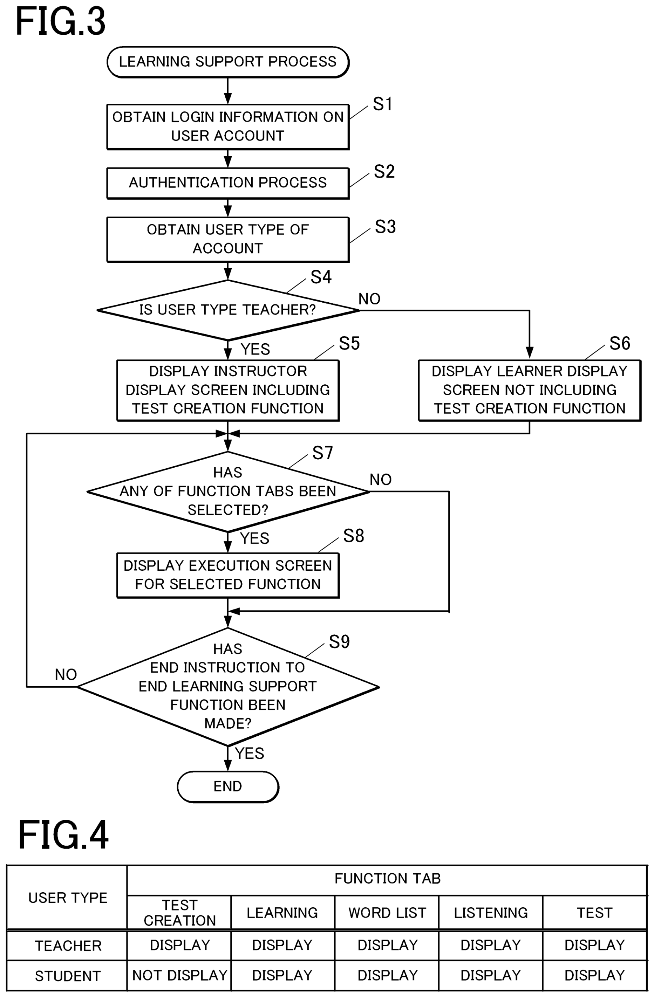

Next, the operation of the learning support system 100 will be described. First, with reference to FIG. 3, a learning support process that is performed by the server device 10 will be described. When a user attempts to log into the website of the learning support service via the browser at his/her terminal device 20, the controller 11 of the server device 10 causes the display 24 of the terminal device 20 to display a screen for inputting his/her user ID and password. The controller 11 of the server device 10 obtains login information (user ID and password) on a user account from the terminal device 20 via the communicator 13 (Step S1). Next, the controller 11 performs an authentication process on the basis of the login information (Step S2). More specifically, the controller 11 refers to the user management table 122, and when there is a record that matches the combination of the pieces of the information, namely, the user ID and the password, input from the terminal device 20, the controller 11 permits the user of the terminal device 20 to log in.

Next, the controller 11 obtains the user type of the user account (Step S3). More specifically, the controller 11 refers to the user management table 122 to obtain the user type corresponding to the user ID input at the terminal device 20. Next, the controller 11 determines whether the user type of the user who is using the terminal device 20 (logged-in user) is teacher (Step S4). If the controller 11 determines that the user type of the logged-in user is teacher (Step S4; YES), the controller 11 causes the display 24 of the terminal device 20 to display the instructor display screen, which includes the test creation function (Step S5). If the controller 11 determines in Step S4 that the user type of the logged-in user is not teacher (Step S4; NO), the controller 11 causes the display 24 of the terminal device 20 to display the learner display screen, which does not include the test creation function (Step S6). For example, the controller 11 refers to a control table shown in FIG. 4 to determine function tabs to be displayed on the display screen in accordance with the user type of the logged-in user.

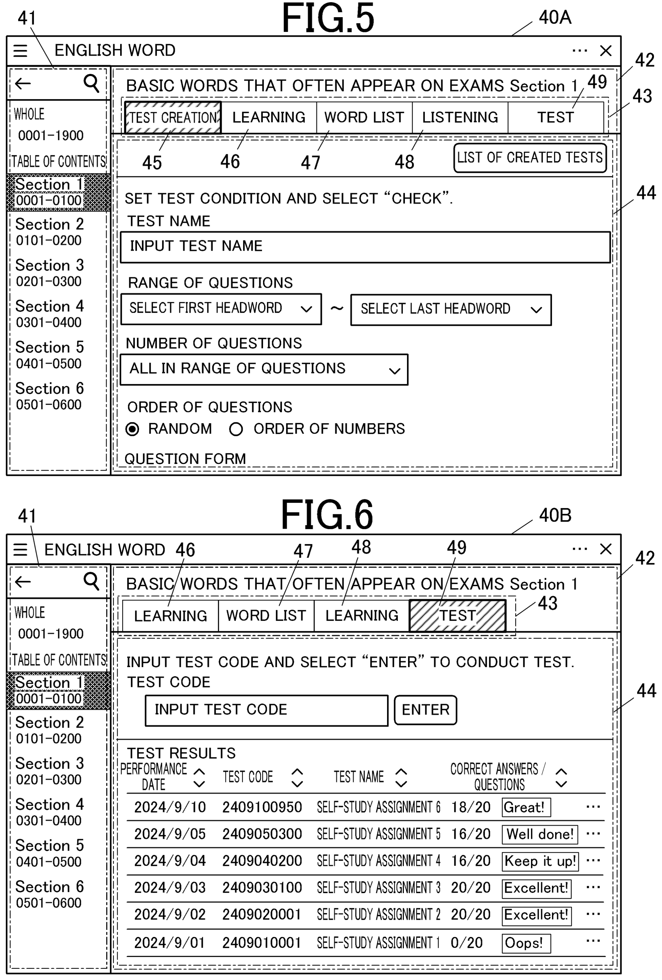

In Step S5, the controller 11 causes the display 24 of the terminal device 20 to display an instructor display screen 40A shown in FIG. 5. In Step S6, the controller 11 causes the display 24 of the terminal device 20 to display a learner display screen 40B shown in FIG. 6. The instructor display screen 40A and the learner display screen 40B both include a table-of-contents area 41 and a learning support function area 42.

In the table-of-contents area 41, a table of contents of the wordbook content is displayed. The wordbook content is divided into sections. Each section includes a plurality of words. In the table-of-contents area 41, with respect to each section, a section name of a section and a range of word numbers of words included in the section are displayed. In the table-of-contents area 41, the user can select a range as a process target. For example, in the case where "Section 1" is selected in the table-of-contents area 41, learning support functions with the words included in the "Section 1" are available. In the table-of-contents area 41, the user can also select the whole wordbook content.

In the learning support function area 42, information on learning support functions using the wordbook content is displayed. The learning support function area 42 includes a function selection area 43 and an execution screen area 44. In the function selection area 43, tabs (function tabs) corresponding to the learning support functions are displayed. As shown in FIG. 5, on the instructor display screen 40A, a "Test Creation" tab 45, a "Learning" tab 46, a "Word List" tab 47, a "Listening" tab 48 and a "Test" tab 49 are displayed in the function selection area 43. As shown in FIG. 6, on the learner display screen 40B, the "Learning" tab 46, the "Word List" tab 47, the "Listening" tab 48 and the "Test" tab 49 are displayed in the function selection area 43. The function tabs 46 to 49 are displayed on both the instructor display screen 40A and the learner display screen 40B, whereas the "Test Creation" tab 45 is displayed on the instructor display screen 40A only. The "Test Creation" function is a learning support function to create a test (test questions) from the learning content. The "Learning" function is a learning support function to conduct self-learning about the learning content. The "Word List" function is a learning support function to browse detailed information on a word in a list of words included in the learning content. The "Listening" function is a learning support function to listen to audio corresponding to a word included in the learning content. The "Test" function is a learning support function to work on a test (test questions). In the execution screen area 44, an execution screen for a function tab selected in the function selection area 43 is displayed.

After Step S5 or Step S6, the controller 11 of the server device 10 determines whether any of the function tabs has been selected at the terminal device 20 (Step S7). If the controller 11 determines that one of the function tabs has been selected (Step S7; YES), the controller 11 causes the display 24 of the terminal device 20 to display the execution screen for the selected function (function tab) (Step S8). More specifically, the controller 11 causes the display 24 of the terminal device 20 to display, in the execution screen area 44 on the instructor display screen 40A or the learner display screen 40B displayed by/on the display 24, the execution screen for the function tab selected in the function selection area 43. In other words, the controller 11 changes display in the execution screen area 44 of the learning support function area 42 in accordance with the selected function tab.

After Step S8, or if the controller 11 determines in Step S7 that none of the function tabs has been selected (Step S7; NO), the controller 11 determines whether an end instruction to end the learning support function(s) has been made at the terminal device 20 (Step S9). If the controller 11 determines that no end instruction to end the learning support function(s) has been made (Step S9; NO), the controller 11 returns the process to Step S7. If the controller 11 determines in Step S9 that an end instruction to end the learning support function(s) has been made (Step S9; YES), the controller 11 ends the learning support process.

As described above, the "Test Creation" tab 45 is displayed on the display screen only when the user type of the user who is using the terminal device 20 is teacher. When the teacher selects the "Test Creation" tab 45 by operating the operation receiver 23, the controller 11 of the server device 10 causes the display 24 of the terminal device 20 to display the execution screen for the "Test Creation" function.

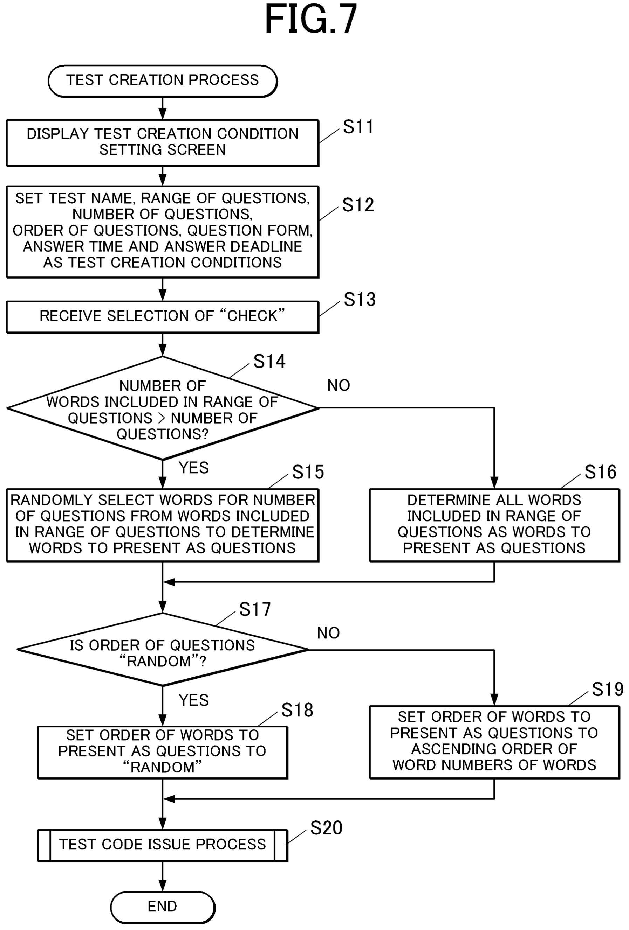

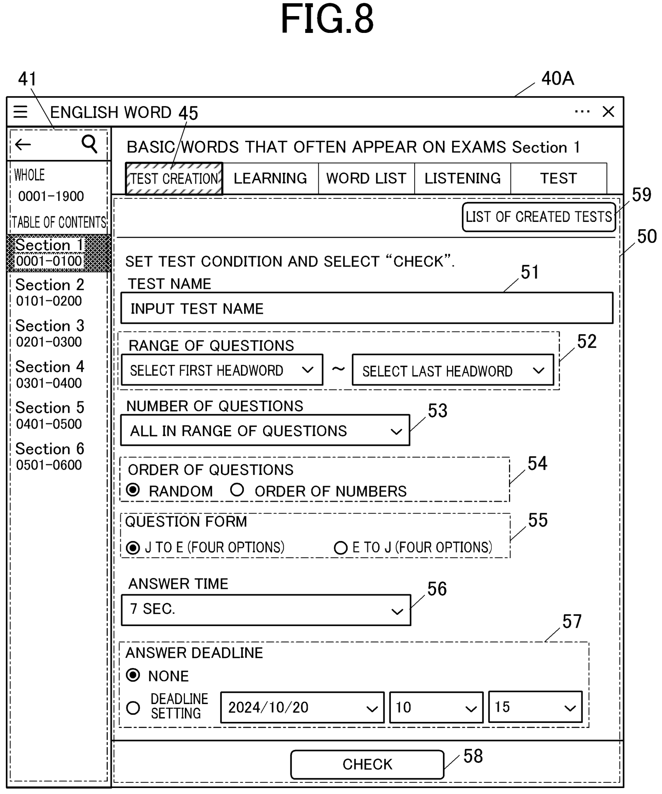

Next, with reference to FIG. 7, a test creation process that is performed by the server device 10 will be described. The test creation process is performed when the user type of the logged-in user is teacher and the "Test Creation" tab 45 on the instructor display screen 40A is selected. The controller 11 of the server device 10 causes the display 24 of the terminal device 20 to display a test creation condition setting screen 50 shown in FIG. 8 (Step S11). The test creation condition setting screen 50 is the execution screen for the "Test Creation" function and is a display screen to receive inputs of creation conditions for test questions. The test creation condition setting screen 50 is displayed in the execution screen area 44 of the learning support function area 42 on the instructor display screen 40A (shown in FIG. 5).

The test creation condition setting screen 50 includes a test name input field 51, a range-of-questions selection field 52, a number-of-questions specification field 53, an order-of-questions selection field 54, a question form selection field 55, an answer time specification field 56, an answer deadline setting field 57, and a "Check" button 58. In the test name input field 51, a test name is input. In the range-of-questions selection field 52, a range of questions for a test is selected from the learning content. In the range-of-questions selection field 52, the range of questions can be selected within the range (e.g., Section 1) selected in the table-of-contents area 41. In the number-of-questions specification field 53, the number of questions to be presented as test questions is specified. In the order-of-questions selection field 54, as the order of questions, either "Random" or "Order of Numbers" is selected. In the question form selection field 55, either a form in which English answers are to be given to Japanese questions or a form in which Japanese answers are to be given to English questions is selected. In the answer time specification field 56, an answer time is specified. The answer time is a time from when a question is displayed to when the next question is displayed. If "Manual" is specified in the answer time specification field 56, until an instruction to proceed to the next question is manually made, it is not performed. In the answer deadline setting field 57, an answer deadline is set. The answer deadline can be set to "None". The "Check" button 58 is selected when various settings on the test creation condition setting screen 50 are completed.

The controller 11 of the server device 10 receives, via the terminal device 20, settings of test creation conditions on the test creation condition setting screen 50 (Step S12). More specifically, the user (teacher) sets, as test creation conditions, a test name, a range of questions, the number of questions, order of questions, a question form, an answer time and an answer deadline by operating the operation receiver 23 of the terminal device 20. When the controller 11 of the server device 10 receives selection of the "Check" button 58 via the terminal device 20 (Step S13), the controller 11 determines whether the number of words included in the range of questions is greater than the number of questions (Step S14).

If the controller 11 determines that the number of words included in the range of questions is greater than the number of questions (Step S14; YES), the controller 11 randomly selects words for the number of questions from the words included in the range of questions to determine words to present as questions (Step S15). If the controller 11 determines in Step S14 that the number of words included in the range of questions is equal to or less than the number of questions (Step S14; NO), the controller 11 determines all the words included in the range of questions as words to present as questions (Step S16).

After Step S15 or Step S16, the controller 11 determines whether the set order of questions is "Random" (Step S17). If the controller 11 determines that the set order of questions is "Random" (Step S17; YES), the controller 11 sets the order of words to present as questions to "Random" (Step S18). If the controller 11 determines in Step S17 that the set order of questions is not "Random" (Step S17; NO), the controller 11 sets the order of words to present as questions to ascending order of their word numbers (Step S19).

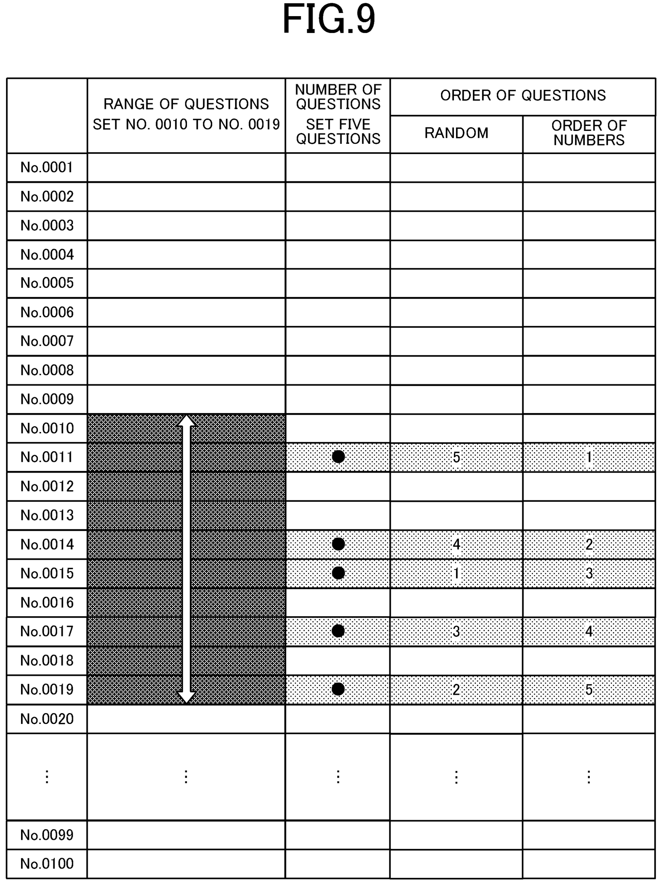

For example, as shown in FIG. 9, if word numbers of No. 0010 to No. 0019 are selected as a range of questions and five is specified as the number of questions, the controller 11 randomly selects five words from the ten words. In FIG. 9, five words having word numbers of No. 0011, No. 0014, No. 0015, No. 0017 and No. 0019 are selected. When the set order of questions is "Random", the controller 11 randomly assigns ordinal numerals as the order of questions to the five words. In the case of "Random" shown in FIG. 9, the word having "No. 0015" is the first question, the word having "No. 0019" is the second question, the word having "No. 0017" is the third question, the word having "No. 0014" is the fourth question, and the word having "No. 0011" is the fifth question. When the set order of questions is "Order of Numbers", the controller 11 assigns ordinal numerals as the order of questions to the five words in ascending order of their word numbers. In the case of "Order of Numbers" shown in FIG. 9, the word having "No. 0011" is the first question, the word having "No. 0014" is the second question, the word having "No. 0015" is the third question, the word having "No. 0017" is the fourth question, and the word having "No. 0019" is the fifth question.

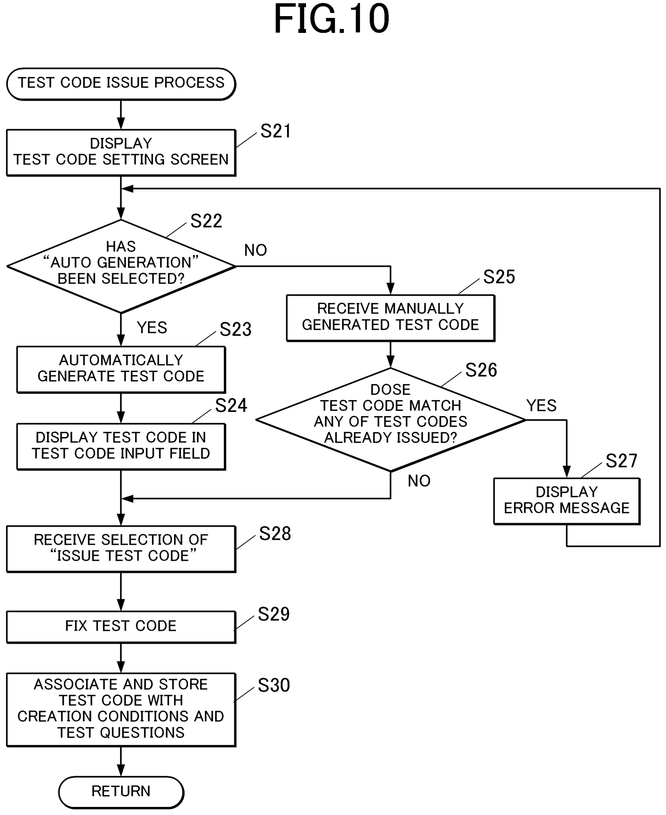

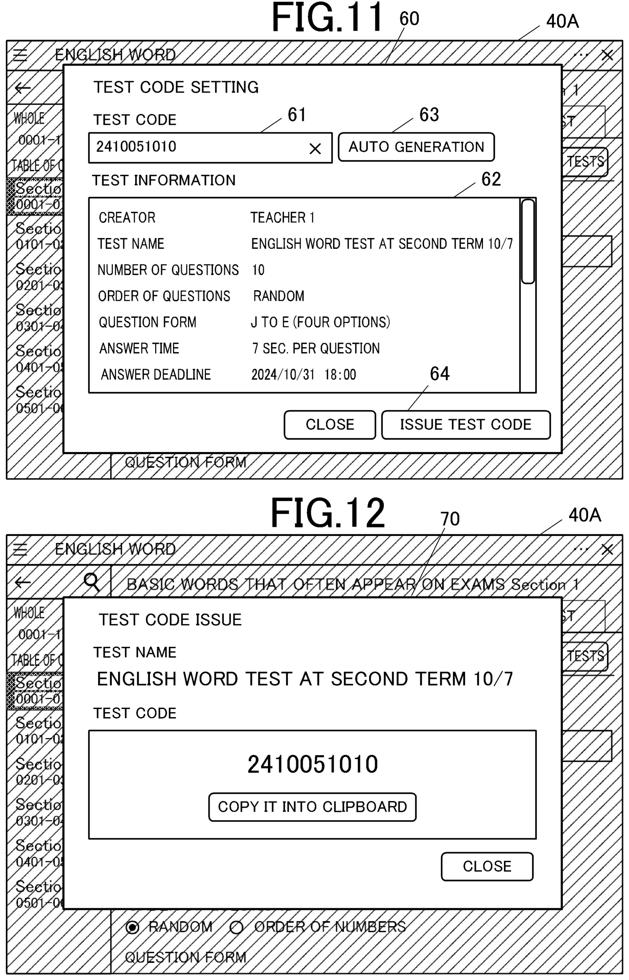

After Step S18 or Step S19, the controller 11 performs a test code issue process (Step S20). In the test code issue process, as shown in FIG. 10, the controller 11 causes the display 24 of the terminal device 20 to display a test code setting screen 60 shown in FIG. 11 (Step S21). The test code setting screen 60 includes a test code input field 61, a test information display field 62, an "Auto Generation" button 63, and an "Issue Test Code" button 64. In the test code input field 61, a test code is input. Alternatively, in the test code input field 61, an automatically generated test code is displayed. In the test information display field 62, information on a created test is displayed. The "Auto Generation" button 63 is selected to automatically generate a test code. The "Issue Test Code" button 64 is selected to make an instruction to issue a test code.

The controller 11 of the server device 10 determines whether the "Auto Generation" button 63 on the test code setting screen 60 has been selected at the terminal device 20 (Step S22). If the controller 11 determines that the "Auto Generation" button 63 has been selected (Step S22; YES), the controller 11 automatically generates a test code such that it does not match any of the test codes already issued (Step S23). The controller 11 causes the display 24 of the terminal device 20 to display the automatically generated test code in the test code input field 61 on the test code setting screen 60 (Step S24).

If the controller 11 determines in Step S22 that the "Auto Generation" button 63 has not been selected (Step S22; NO), the controller 11 receives a manual input of a test code via the terminal device 20 (Step S25). More specifically, the user inputs a test code in the test code input field 61 on the test code setting screen 60 by operating the operation receiver 23 of the terminal device 20.

Next, the controller 11 of the server device 10 determines whether the manually input test code matches any of the test codes already issued (Step S26). More specifically, the controller 11 refers to the test management table 124 to determine whether the test codes already issued include a test code that matches the manually input test code. If the controller 11 determines that the manually input test code matches one of the test codes already issued (Step S26; YES), the controller 11 causes the display 24 of the terminal device 20 to display an error message (Step S27). For example, the controller 11 causes the display 24 of the terminal device 20 to display a message that the input test code matches one of the test codes already issued. The controller 11 then returns the process to Step S22.

After Step S24, or if the controller 11 determines in Step S26 that the manually input test code does not match any of the test codes already issued (Step S26; NO), the controller 11 moves the process to Step S28. In Step S28, the controller 11 receives selection of the "Issue Test Code" button 64 via the terminal device 20. The controller 11 then fixes the test code (Step S29). The controller 11 associates and stores the test code with the creation conditions and the test questions (Step S30). More specifically, the controller 11 adds a new record to the test management table 124 to store various pieces of information (test code, test name, test creation conditions, test contents corresponding to questions, creator's user ID, creation date, etc.). The controller 11 causes the display 24 of the terminal device 20 to display a test code issued screen 70 shown in FIG. 12. This concludes the test code issue process and the test creation process. The teacher verbally informs the students of the test code during a lesson or the like. Alternatively, the teacher may convey the test code to the students through screen sharing on the system or the like. The teacher may convey the test code to the students by another means of information communications, such as a chat or an email. The students to whom the teacher conveys the test code are students who are to take the test.

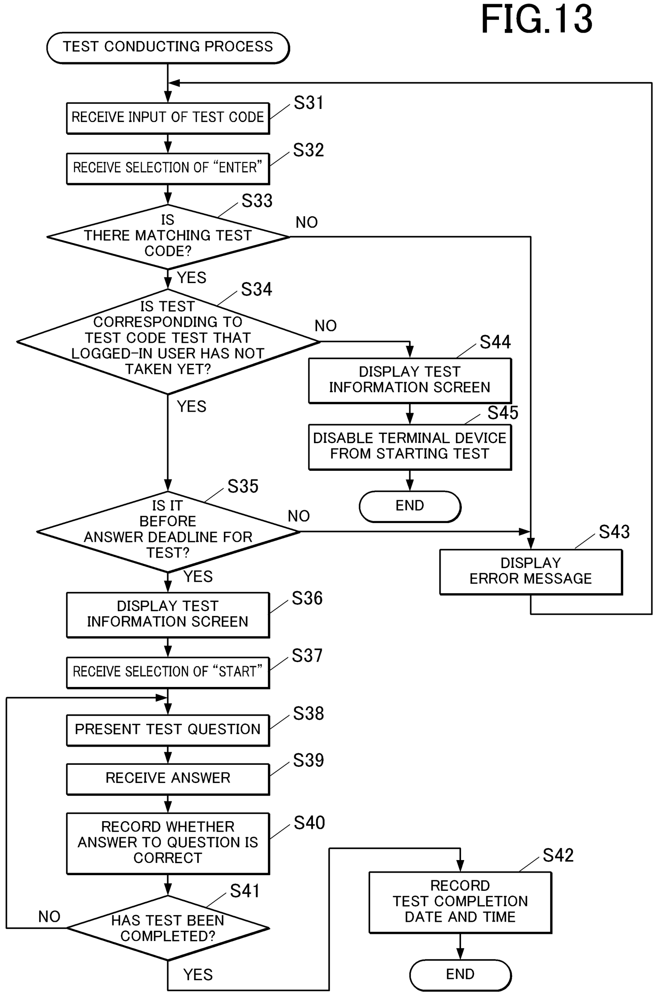

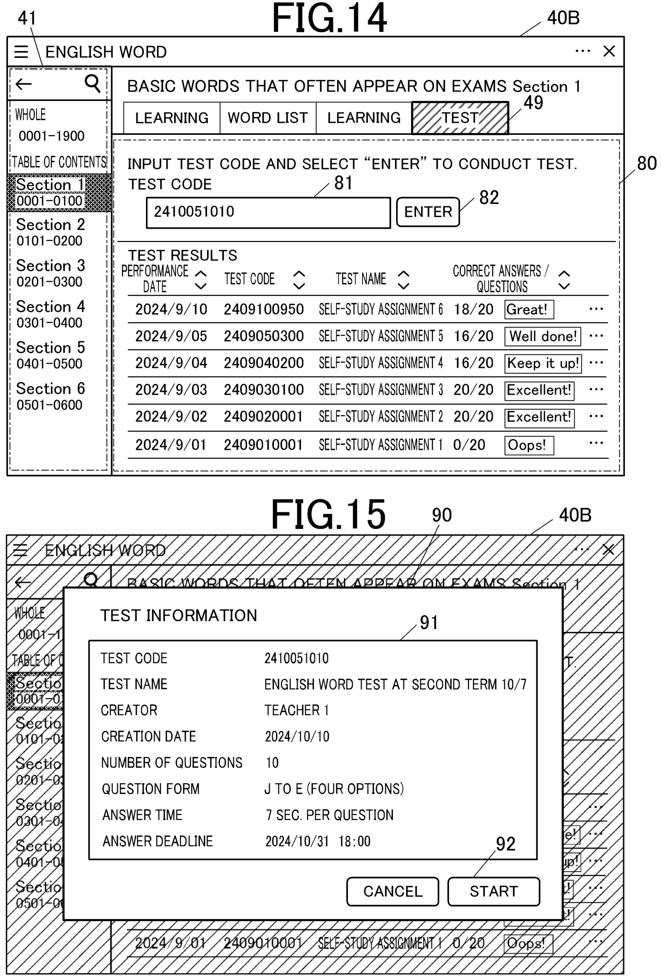

Next, with reference to FIG. 13, a test conducting process that is performed by the server device 10 will be described. The test conducting process is performed when the "Test" tab 49 is selected at the terminal device 20. The test conducting process is performed on the assumption that the user type of the logged-in user is student. However, even if the user type thereof is teacher, the user can take tests. In this embodiment, it is assumed that the user type of the logged-in user is student. When the "Test" tab 49 on the learner display screen 40B is selected at the terminal device 20, the controller 11 of the server device 10 causes the display 24 of the terminal device 20 to display a test code input screen 80 shown in FIG. 14. The test code input screen 80 is displayed in the execution screen area 44 of the learning support function area 42 on the learner display screen 40B (shown in FIG. 6). The test code input screen 80 includes a test code input field 81 and an "Enter" button 82. In the test code input field 81, a test code is input. In FIG. 14, in the table-of-contents area 41, "Section 1" is selected. However, a test code of a test created from not "Section 1" but another can also be received. The "Enter" button 82 is selected to make an instruction to conduct a test.

The controller 11 receives an input of a test code via the terminal device 20 (Step S31). More specifically, the user inputs a test code in the test code input field 81 by operating the operation receiver 23 of the terminal device 20. When the controller 11 receives selection of the "Enter" button 82 via the terminal device 20 (Step S32), the controller 11 refers to the test management table 124 to determine whether there is a test code that matches the input test code (Step S33) .

If the controller 11 determines that there is a test code that matches the input test code in the test management table 124 (Step S33; YES), the controller 11 moves the process to Step S34. In Step S34, the controller 11 determines whether the test corresponding to the input test code is a test that the logged-in user has not taken yet. More specifically, the controller 11 refers to the test result table 125 to determine whether there is a record corresponding to the combination of the input test code and the user ID of the logged-in user (learner). The controller 11 determines that the test is a test that the logged-in user has not taken yet when there is no record corresponding to the combination of the input test code and the user ID of the logged-in user in the test result table 125.

If the controller 11 determines that the test is a test that the logged-in user has not taken yet (Step S34; YES), the controller 11 determines whether it is before the answer deadline for the test (Step S35). More specifically, the controller 11 refers to the test management table 124 to obtain the answer deadline corresponding to the input test code, and determines whether the current date and time is before the answer deadline. If the controller 11 determines that it is before the answer deadline for the test (Step S35; YES), the controller 11 causes the display 24 of the terminal device 20 to display a test information screen 90 shown in FIG. 15 (Step S36). The test information screen 90 includes a test information display field 91 and a "Start" button 92. In the test information display field 91, pieces of test information (test code, test name, creator, creation date, number of questions, question form, answer time, answer deadline, etc.) are displayed. The "Start" button 92 is selected to make an instruction to start a test.

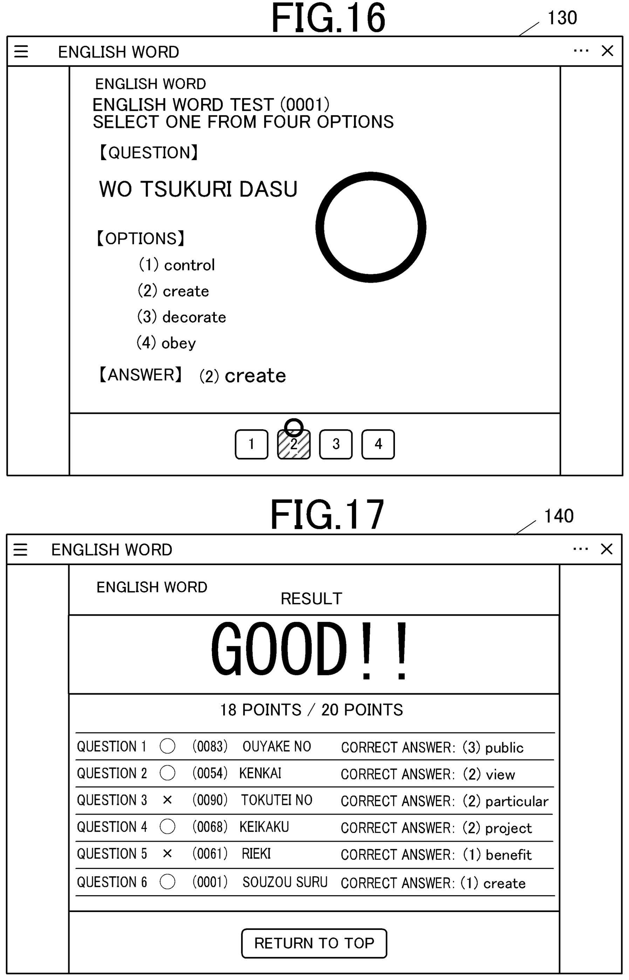

When the controller 11 receives selection of the "Start" button 92 via the terminal device 20 (Step S37), the controller 11 causes the display 24 of the terminal device 20 to display test questions corresponding to the input test code (Step S38). More specifically, the controller 11 refers to the test management table 124, and causes the display 24 to display a test screen 130 shown in FIG. 16 in accordance with test contents corresponding to test questions corresponding to the input test code. The test screen 130 includes a question (Japanese word) and options for selecting an answer (English word). The controller 11 receives an answer to each question in the test via the terminal device 20 (Step S39). More specifically, the user selects an answer to each question in the test by operating the operation receiver 23.

The controller 11 determines whether each answer selected at the terminal device 20 is correct and records that it is correct or incorrect with respect to each question (Step S40). More specifically, the controller 11 associates and stores in the test result table 125 correct/incorrect information on each question with the test code and the user ID of the learner. The controller 11 may cause the display 24 of the terminal device 20 to display, with respect to each question, a mark or the like indicating that the answer is correct or a mark or the like indicating that the answer is incorrect on the test screen 130.

Next, the controller 11 determines whether the test has been completed (Step S41). More specifically, the controller 11 determines whether all the questions included in the test have been completed. If the controller 11 determines that the test has not been completed yet (Step S41; NO), the controller 11 returns the process to Step S38 to present the next question. Even if the user does not select any option as an answer to a question, the controller 11 transitions the screen to a screen for the next question in accordance with the answer time set for the test. If the controller 11 determines in Step S41 that the test has been completed (Step S41; YES), the controller 11 records a test completion date and time (Step S42). More specifically, the controller 11 associates and stores in the test result table 125 the date and time at which the test was completed as the test completion date and time with the test code and the user ID of the learner. At the time, the controller 11 causes the display 24 of the terminal device 20 to display a test result screen 140 shown in FIG. 17. On the test result screen 140, questions, their correct answers and pieces of correct/incorrect information, which indicate whether user's answers to the questions are correct, are displayed. On the test result screen 140, the number of questions in the test and the number of correct answers given thereto by the user are also displayed.

If the controller 11 determines in Step S33 that there is no test code that matches the input test code in the test management table 124 (Step S33; NO), the controller 11 causes the display 24 of the terminal device 20 to display an error message (Step S43). For example, the controller 11 causes the display 24 to display a message that there is no corresponding test code. The controller 11 then returns the process to Step S31.

If the controller 11 determines in Step S35 that it is not before the answer deadline for the test (Step S35; NO), the controller 11 causes the display 24 of the terminal device 20 to display an error message (Step S43). For example, the controller 11 causes the display 24 to display a message that the test is overdue. The controller 11 then returns the process to Step S31.

If the controller 11 determines in Step S34 that the test is a test that the logged-in user has already taken (Step S34; NO), the controller 11 causes the display 24 of the terminal device 20 to display a test information screen (Step S44). In this case, the controller 11 disables the terminal device 20 from starting the test (Step S45). For example, the controller 11 causes the display 24 of the terminal 20 to display a test information screen that is the same as the test information screen 90 shown in FIG. 15 except the "Start" button 92. After Step S42 or Step S45, the controller 11 ends the test conducting process.

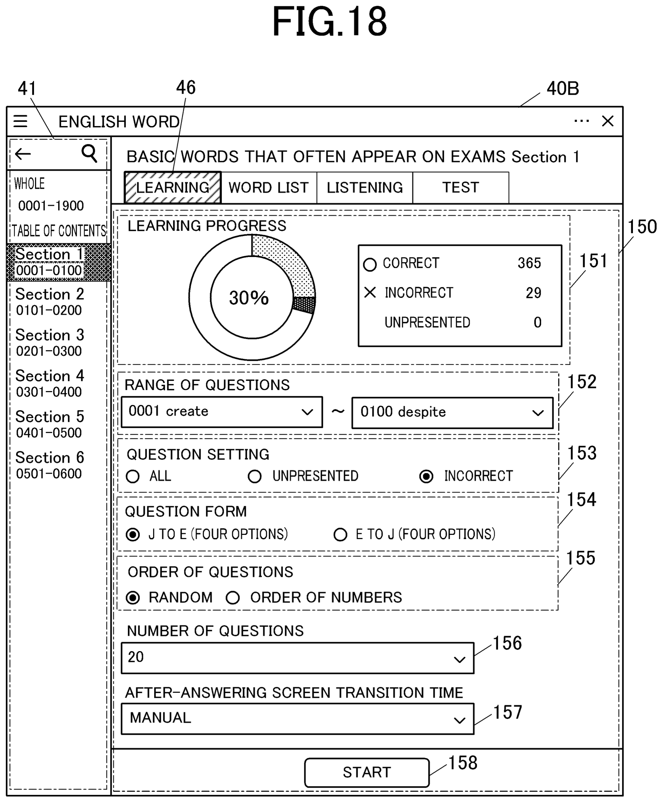

Next, a self-learning process that is performed by the server device 10 will be described. The self-learning process is performed when the "Learning" tab 46 is selected at the terminal device 20. The self-learning process is performed on the assumption that the user type of the logged-in user is student. However, even if the user type thereof is teacher, the user can conduct self-learning. In this embodiment, it is assumed that the user type of the logged-in user is student. When the "Learning" tab 46 on the learner display screen 40B is selected at the terminal device 20, the controller 11 of the server device 10 causes the display 24 of the terminal device 20 to display a learning condition setting screen 150 shown in FIG. 18. The learning condition setting screen 150 is displayed in the execution screen area 44 of the learning support function area 42 on the learner display screen 40B (shown in FIG. 6).

The learning condition setting screen 150 includes a learning progress display field 151, a range-of-questions selection field 152, a question setting field 153, a question form selection field 154, an order-of-questions selection field 155, a number-of-questions specification field 156, an after-answering screen transition time specification field 157, and a "Start" button 158. In the learning progress display field 151, as the progress of user's self-learning, regarding the words (questions) included in the range selected in the table-of-contents area 41, the number of words to which the user has given correct answers, the number of words to which the user has given incorrect answers, and the number of words that the user has not worked on yet (i.e., the number of unpresented words), are displayed. In the range-of-questions selection field 152, a range of questions for self-learning is selected from the learning content. In the range-of-questions selection field 152, the range of questions can be selected within the range (e.g., Section 1) selected in the table-of-contents area 41. In the question setting field 153, a narrowing condition (all, unpresented, or incorrect) based on the history of the user's self-learning is set. In the question form selection field 154, either the form in which English answers are to be given to Japanese questions or the form in which Japanese answers are to be given to English questions is selected. In the order-of-questions selection field 155, as the order of questions, either "Random" or "Order of Numbers" is selected. In the number-of-questions specification field 156, the number of questions to be presented for self-learning is specified. In the after-answering screen transition time specification field 157, a time from when a question is answered to when the screen transitions to the screen for the next question is set. If "Manual" is specified in the after-answering screen transition time specification field 157, until an instruction to proceed to the next question is manually made, it is not performed. The "Start" button 158 is selected to make an instruction to start self-learning with the conditions set on the learning condition setting screen 150.

When the controller 11 receives, via the terminal device 20, settings of various learning conditions on the learning condition setting screen 150 and selection of the "Start" button 158, the controller 11 causes the display 24 of the terminal device 20 to display a question screen for self-learning. The controller 11 extracts, from the words in the range of questions selected in the range-of-questions field 152, words that satisfy the condition set in the question setting field 153. The controller 11 randomly selects words for the number of questions specified in the number-of-questions field 156 from the extracted words to determine words to present as questions. If the number of the extracted words is equal to or less than the number of questions, the controller 11 determines all the extracted words to present as questions. The controller 11 sets the order of words to present as questions in accordance with "Random" or "Order of Numbers" selected in the order-of-questions selection field 155. The question screen is similar to the test screen 130 shown in FIG. 16. The controller 11 receives an answer to each presented question via the terminal device 20. The controller 11 determines whether each answer selected at the terminal device 20 is correct and records that it is correct or incorrect with respect to each question. More specifically, the controller 11 associates and stores in the self-learning result table 126 correct/incorrect information on each question with the user ID of the learner. The controller 11 also stores in the self-learning result table 126 the date and time at which the self-learning was completed as the self-learning completion date and time.

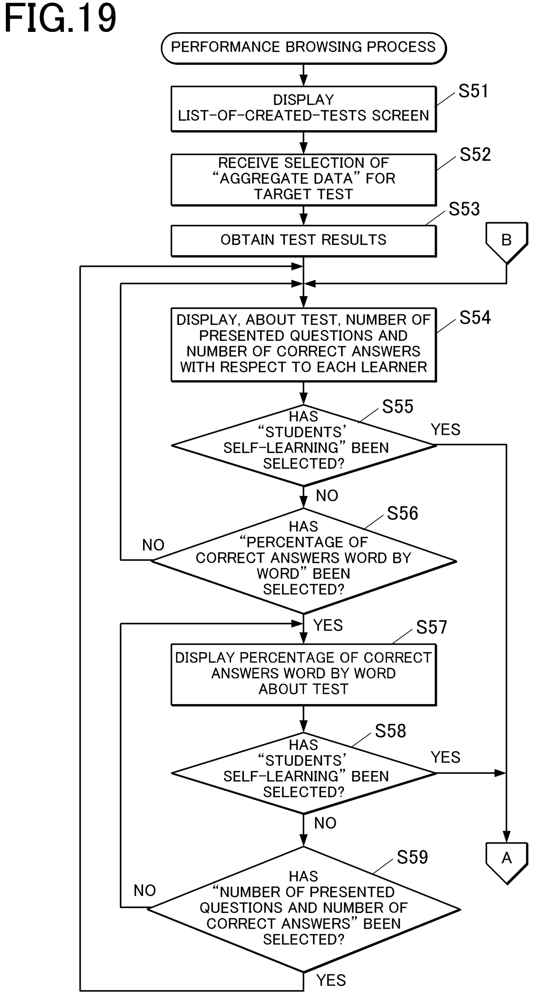

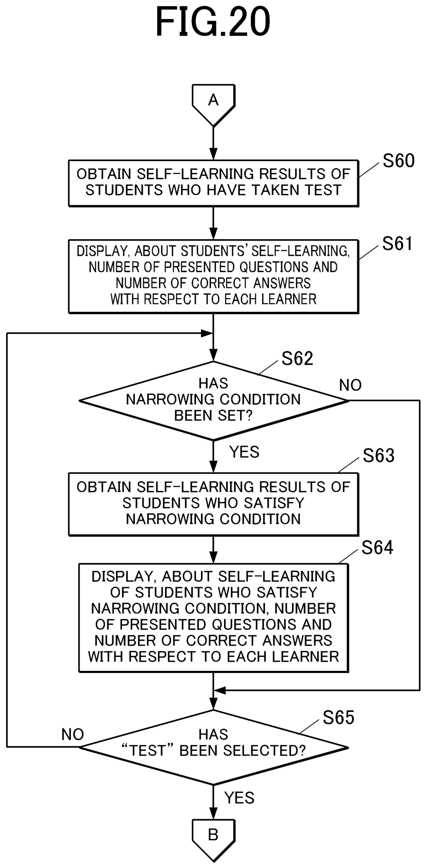

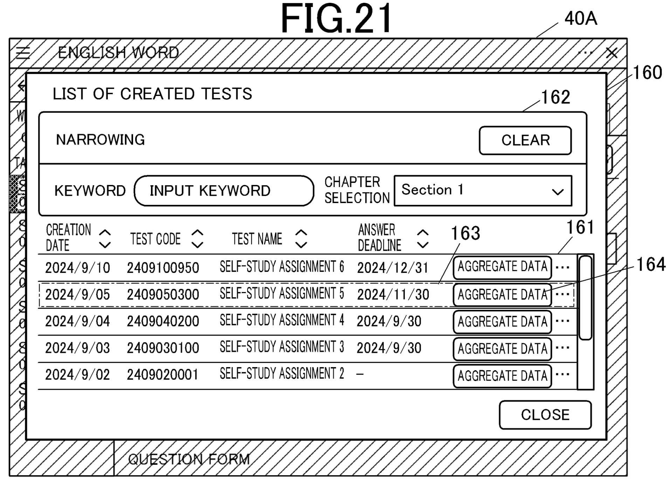

Next, with reference to FIG. 19 and FIG. 20, a performance browsing process that is performed by the server device 10 will be described. The performance browsing process is performed when the user type of the logged-in user is teacher and a "Created Test List" button 59 on the test creation condition setting screen 50 (shown in FIG. 8) is selected in the state in which the "Test Creation" tab 45 on the instructor display screen 40A is selected. The controller 11 of the server device 10 causes the display 24 of the terminal device 20 to display a list-of-created-tests screen 160 shown in FIG. 21 (Step S51). The list-of-created-tests screen 160 includes a test list field 161 and a narrowing condition setting field 162. In the test list field 161, among the tests created by the logged-in user, tests that satisfy a condition(s) set in the narrowing condition setting field 162 are displayed. In the narrowing condition setting field 162, a keyword and/or a chapter are set as narrowing conditions to narrow down tests to be displayed in the test list field 161. When a keyword is input in "Keyword" as a narrowing condition, tests whose test names contain the input keyword are displayed in the test list field 161. When a chapter is selected from "Chapter Selection" as a narrowing condition, tests whose ranges of questions are included in the selected chapter are displayed in the test list field 161. More specifically, the controller 11 of the server device 10 refers to the test management table 124 to extract records in which the creator's user ID is the user ID of the logged-in user and that satisfy the narrowing condition(s) set in the narrowing condition setting field 162. The controller 11 causes the display 24 of the terminal device 20 to display test information (creation date, test code, test name, answer deadline, etc.) on each test corresponding to each extracted record in the test list field 161. In addition, in the test list field 161, "Aggregate Data" buttons are provided for the respective tests.

The controller 11 receives selection of an "Aggregate Data" button for the target test via the terminal device 20 (Step S52). More specifically, the user (teacher) selects an "Aggregate Data" button for the target test in the test list field 161 by operating the operation receiver 23 of the terminal device 20. For example, in the test list field 161, if a test 163 having a test name of "Self-Study Assignment 5" is the target test, the user selects an "Aggregate Data" button 164. The controller 11 of the server device 10 obtains, from the test result table 125, test results (user IDs, pieces of correct/incorrect information on questions, test completion dates and times, etc.) of learners corresponding to the test code of the target test (Step S53).

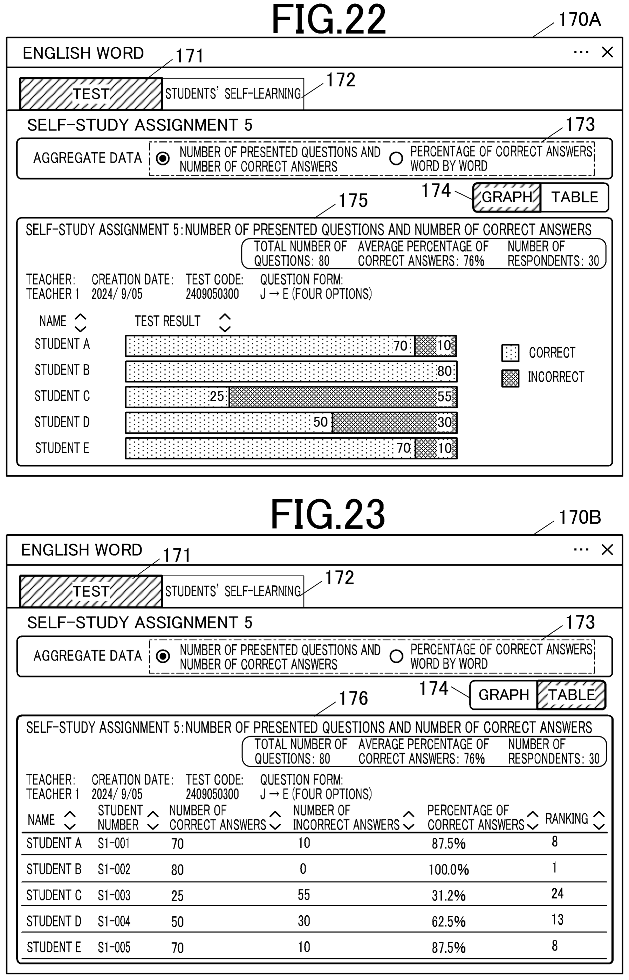

Next, the controller 11 causes the display 24 of the terminal device 20 to display, with respect to each learner, the number of presented questions and the number of correct answers given thereto on the basis of each learner's test result of the target test (Step S54). A learner-by-learner test statistics screen 170A shown in FIG. 22 and a learner-by-learner test statistics screen 170B shown in FIG. 23 are examples of a screen containing statistical information on learners' performances on a test, and are displayed by/on the display 24. The learner-by-learner test statistics screen 170A includes a "Test" tab 171, a "Students' Self-Learning" tab 172, an aggregation condition selection field 173, a graph/table selection field 174, and a graph field 175. The learner-by-learner test statistics screen 170B includes the "Test" tab 171, the "Students' Self-Learning" tab 172, the aggregation condition selection field 173, the graph/table selection field 174, and a table field 176. On the learner-by-learner test statistics screen 170A and the learner-by-learner test statistics screen 170B, the "Test" tab 171 is selected. The "Students' Self-Learning" tab 172 is selected to make an instruction to transition to a statistics screen about students' self-learning. In the aggregation condition selection field 173, either "Number of Presented Questions and Number of Correct Answers" or "Percentage of Correct Answers Word by Word" is selected. On the learner-by-learner test statistics screen 170A and the learner-by-learner test statistics screen 170B, the "Number of Presented Questions and Number of Correct Answers" is selected in the aggregation condition selection field 173. In the graph/table selection field 174, either "Graph" or "Table" is selected. On the learner-by-learner test statistics screen 170A, the "Graph" is selected in the graph/table selection field 174. On the learner-by-learner test statistics screen 170B, the "Table" is selected in the graph/table selection field 174. In the graph field 175, about the target test, with respect to each learner, statistical information indicating the number of correct answers and the number of incorrect answers are displayed in the graph form. In the table field 176, about the target test, with respect to each learner, statistical information indicating the number of correct answers, the number of incorrect answers and the percentage of correct answers are displayed in the table form. The controller 11 calculates, with respect to each learner, the ratio of the number of correct answers to the number of questions (sum of the number of correct answers and the number of incorrect answers) as the percentage of correct answers. Names of the learners displayed on the learner-by-learner test statistics screens 170A, 170B are user names obtained from the user management table 122, the user names corresponding to the learners' user IDs included in the test results obtained in Step S53.

In Step S54, the controller 11 of the server device 10 first causes the display 24 of the terminal device 20 to display the learner-by-learner test statistics screen 170A. When the user changes the selection in the graph/table selection field 174 on the learner-by-learner test statistics screen 170A from the "Graph" to the "Table", the controller 11 of the server device 10 causes the display 24 of the terminal device 20 to display the learner-by-learner test statistics screen 170B. When the user changes the selection in the graph/table selection field 174 on the learner-by-learner test statistics screen 170B from the "Table" to the "Graph", the controller 11 of the server device 10 causes the display 24 of the terminal device 20 to display the learner-by-learner test statistics screen 170A.

Next, the controller 11 determines whether the "Students' Self-Learning" tab 172 has been selected on the learner-by-learner test statistics screen 170A or the learner-by-learner test statistics screen 170B at the terminal device 20 (Step S55). If the controller 11 determines that the "Students' Self-Learning" tab 172 has not been selected (Step S55; NO), the controller 11 moves the process to Step S56. In Step S56, the controller 11 determines whether the "Percentage of Correct Answers Word by Word" has been selected in the aggregation condition selection field 173 on the learner-by-learner test statistics screen 170A or the learner-by-learner test statistics screen 170B at the terminal device 20. If the controller 11 determines that the "Percentage of Correct Answers Word by Word" has not been selected (Step S56; NO), the controller 11 returns the process to Step S54.

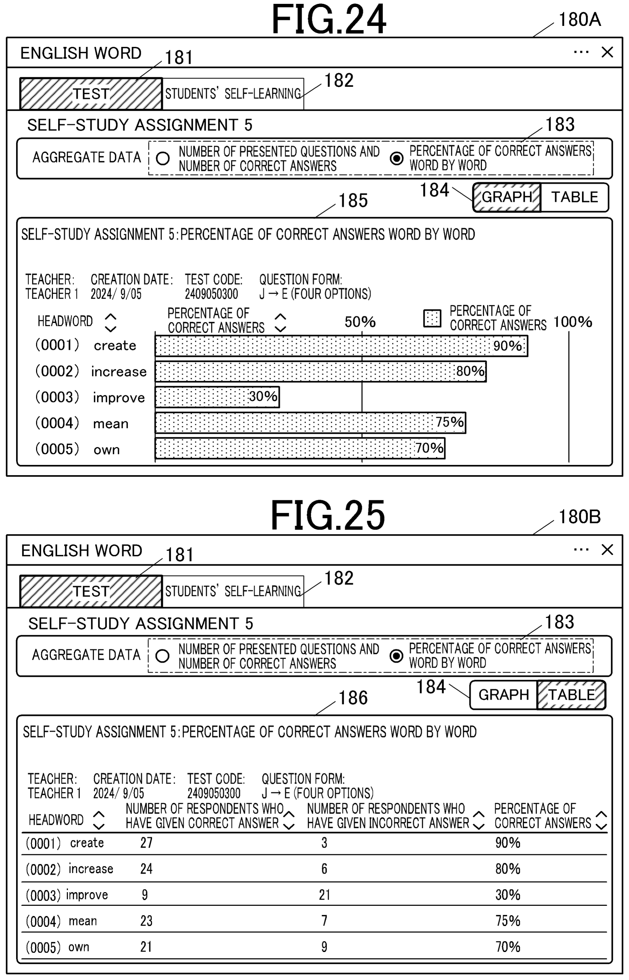

If the controller 11 determines in Step S56 that the "Percentage of Correct Answers Word by Word" has been selected (Step S56; YES), the controller 11 causes the display 24 of the terminal device 20 to display the percentage of correct answers word by word on the basis of the test results of the target test (Step S57). A word-by-word test statistics screen 180A shown in FIG. 24 and a word-by-word test statistics screen 180B shown in FIG. 25 are examples of a screen containing statistical information on performances on a test word by word, and are displayed by/on the display 24. The word-by-word test statistics screen 180A includes a "Test" tab 181, a "Students' Self-Learning" tab 182, an aggregation condition selection field 183, a graph/table selection field 184, and a graph field 185. The word-by-word test statistics screen 180B includes the "Test" tab 181, the "Students' Self-Learning" tab 182, the aggregation condition selection field 183, the graph/table selection field 184, and a table field 186. On the word-by-word test statistics screen 180A and the word-by-word test statistics screen 180B, the "Test" tab 181 is selected. The "Students' Self-Learning" tab 182 is selected to make an instruction to transition to a statistics screen about students' self-learning. In the aggregation condition selection field 183, either "Number of Presented Questions and Number of Correct Answers" or "Percentage of Correct Answers Word by Word" is selected. On the word-by-word test statistics screen 180A and the word-by-word test statistics screen 180B, the "Percentage of Correct Answers Word by Word" is selected in the aggregation condition selection field 183. In the graph/table selection field 184, either "Graph" or "Table" is selected. On the word-by-word test statistics screen 180A, the "Graph" is selected in the graph/table selection field 184. On the word-by-word test statistics screen 180B, the "Table" is selected in the graph/table selection field 184. In the graph field 185, about the target test, with respect to each word, statistical information indicating the percentage of correct answers are displayed in the graph form. The controller 11 of the server device 10 calculates, with respect to each word, the ratio of the number of learners (respondents) who have given a correct answer(s) to the number of learners who have taken the test (number of respondents) as the percentage of correct answers. In the table field 186, about the target test, with respect to each word, statistical information indicating the number of learners who have given a correct answer(s), the number of learners who have given incorrect answers and the percentage of correct answers are displayed in the table form. The sum of the number of learners (respondents) who have given a correct answer(s) and the number of learners (respondents) who have given incorrect answers is the number of respondents. The controller 11 of the server device 10 may cause the display 24 to further graphically display the number of respondents to each word as a question and the number of respondents (leaners) who have given a correct answer(s) thereto in the graph field 185. The controller 11 of the server device 10 may cause the display 24 to further display the number of respondents to each word as a question in the table field 186.

In Step S57, the controller 11 of the server device 10 first causes the display 24 of the terminal device 20 to display the word-by-word test statistics screen 180A. When the user changes the selection in the graph/table selection field 184 on the word-by-word test statistics screen 180A from the "Graph" to the "Table", the controller 11 of the server device 10 causes the display 24 of the terminal device 20 to display the word-by-word test statistics screen 180B. When the user changes the selection in the graph/table selection field 184 on the word-by-word test statistics screen 180B from the "Table" to the "Graph", the controller 11 of the server device 10 causes the display 24 of the terminal device 20 to display the word-by-word test statistics screen 180A.

Next, the controller 11 determines whether the "Students' Self-Learning" tab 182 has been selected on the word-by-word test statistics screen 180A or the word-by-word test statistics screen 180B at the terminal device 20 (Step S58). If the controller 11 determines that the "Students' Self-Learning" tab 182 has not been selected (Step S58; NO), the controller 11 moves the process to Step S59. In Step S59, the controller 11 determines whether the "Number of Presented Questions and Number of Correct Answers" has been selected in the aggregation condition selection field 183 on the word-by-word test statistics screen 180A or the word-by-word test statistics screen 180B at the terminal device 20. If the controller 11 determines that the "Number of Presented Questions and Number of Correct Answers" has not been selected (Step S59; NO), the controller 11 returns the process to Step S57. If the controller 11 determines in Step S59 that the "Number of Presented Questions and Number of Correct Answers" has been selected (Step S59; YES), the controller 11 returns the process to Step S54.

If the controller 11 determines in Step S55 that the "Students' Self-Learning" tab 172 has been selected (Step S55; YES), or if the controller 11 determines in Step S58 that the "Students' Self-Learning" tab 182 has been selected (Step S58; YES), the controller 11 moves the process to Step S60 shown in FIG. 20. In Step S60, the controller 11 obtains self-learning results (user IDs, pieces of correct/incorrect information on questions, self-learning completion dates and times, etc.) of students (learners) who have taken the target test from the self-learning result table 126.

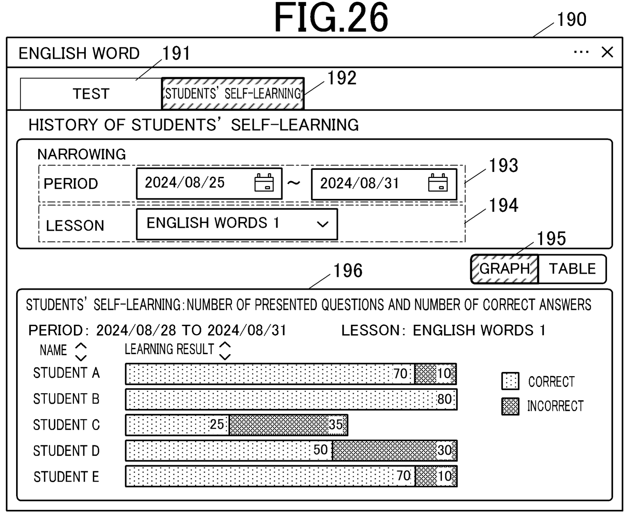

Next, the controller 11 causes the display 24 of the terminal device 20 to display, with respect to each learner, the number of presented questions and the number of correct answers given thereto on the basis of the self-learning result of each student (learner) who has taken the target test (Step S61). A learner-by-learner self-learning statistics screen 190 shown in FIG. 26 is an example of a screen containing statistical information on learners' self-learning results, and is displayed by/on the display 24. The learner-by-learner self-learning statistics screen 190 includes a "Test" tab 191, a "Students' Self-Learning" tab 192, narrowing condition setting fields 193, 194, a graph/table selection field 195, and a graph field 196. On the learner-by-learner self-learning statistics screen 190, the "Students' Self-Learning" tab 192 is selected. The "Test" tab 191 is selected to make an instruction to transition to a statistics screen about a test. In the narrowing condition setting field 193, a narrowing condition in terms of a period during which self-learning was conducted is set. Before the condition is set in the narrowing condition setting field 193, the entire period is the target. In the narrowing condition setting field 194, a narrowing condition in terms of a lesson for which learners (students) are registered is set to extract leaners. In the narrowing condition setting field 194, lessons for which the logged-in user is registered as a teacher (instructor) in the lesson management table 127 are displayed as options. Before the condition is set in the narrowing condition setting field 194, all the students who have taken the target test are the display target. In the graph/table selection field 195, either "Graph" or "Table" is selected. On the learner-by-learner self-learning statistics screen 190, the "Graph" is selected in the graph/table selection field 195. In the graph field 196, about students' self-learning, with respect to each learner, statistical information indicating the number of correct answers and the number of incorrect answers are displayed in the graph form. The sum of the number of correct answers and the number of incorrect answers corresponds to the number of presented questions. Names of the learners displayed on the learner-by-learner self-learning statistics screen 190 are user names obtained from the user management table 122, the user names corresponding to the learners' user IDs included in the self-learning results obtained in Step S60. When the user changes the selection in the graph/table selection field 195 on the learner-by-learner self-learning statistics screen 190 from the "Graph" to the "Table", the controller 11 of the server device 10 causes the display 24 of the terminal device 20 to change the display form of the self-learning results (numbers of correct answers and numbers of incorrect answers) of the learners to the table form.

The controller 11 determines whether one or more narrowing conditions have been set on the self-learning statistics screen (learner-by-learner self-learning statistics screen 190) displayed by/on the display 24 of the terminal device 20 (Step S62). If the controller 11 determines that one or more narrowing conditions have been set (Step S62; YES), the controller 11 obtains self-learning results of students who satisfy the narrowing condition(s) from the self-learning result table 126 (Step S63). For example, when a period is selected in "Period" as a narrowing condition, the controller 11 refers to the self-learning result table 126 to extract only records in which the self-learning completion date and time is within the selected period. As another example, when a lesson is selected in "Lesson" as a narrowing condition, the controller 11 refers to the lesson management table 127 to identify students' (learners') user IDs associated with the selected lesson. The controller 11 then refers to the self-learning result table 126 to extract only records corresponding to the identified students' (learners') user IDs. The controller 11 may further narrow down records to extract with a condition of a learning range (chapter, etc.) specified by the user from the learning content to obtain self-learning results of students. More specifically, the controller 11 refers to the self-learning result table 126 to extract only records in which the word numbers of words as questions for self-learning are included in the specified learning range. Next, the controller 11 causes the display 24 of the terminal device 20 to display, with respect to each learner, the number of presented questions and the number of correct answers given thereto on the basis of the self-learning result of each student (learner) who satisfies the narrowing condition(s) (Step S64).

After Step S64, or if the controller 11 determines in Step S62 that no narrowing condition has been set (Step S62; NO), the controller 11 moves the process to Step S65. In Step S65, the controller 11 determines whether the "Test" tab 191 has been selected on the learner-by-learner self-learning statistics screen 190 at the terminal device 20. If the controller 11 determines that the "Test" tab 191 has not been selected (Step S65; NO), the controller 11 returns the process to Step S62. If the controller 11 determines in Step S65 that the "Test" tab 191 has been selected (Step S65; YES), the controller 11 returns the process to Step S54. When the controller 11 receives a screen closing instruction or the like in Step S54, Step S57, Step S61 or Step S64, the controller 11 ends the performance browsing process.

As described above, according to this embodiment, the controller 11 of the server device 10 obtains test results (pieces of performance information) of learners on a test created on the basis of a predetermined learning content and self-learning results (learning states) of the learners about the predetermined learning content. The controller 11 causes the display 24 of the terminal device 20 to display statistical information about the predetermined learning content based on the test results and the self-learning results. Thus, the controller 11 can provide, about the learning content, the test results of the learners and the learning states of self-learning conducted by the learners by themselves. Since the learning content from which the test questions have been extracted and the learning content used for the self learning are the same, it is easy for a teacher to check correlation between the test results and the self-learning results. The teacher compares and checks the test results and the self-learning results of the respective students on the basis of the statistical information displayed by the learning support system 100. This makes it easy to generate questions for the next test to be suitable for each student. In other words, presentation of information in this embodiment (display of the test results and the self-learning results of the learners) can reliably assist the user in carrying out technical tasks (teacher's operations to generate a test via the learning support system) by means of the human-machine interaction process.

The self-learning results (learning states) each include the number of questions worked on by each learner in the predetermined learning content and the number of correct answers given thereto by each learner. The controller 11 causes the display 24 of the terminal device 20 to display, as the statistical information on the self-learning results, the first statistical information (learner-by-learner self-learning statistics screen 190) that includes the number of questions worked on by each learner and the number of correct answers given thereto by each learner. Thus, the controller 11 can provide the learning states of two or more learners in a comparable manner.

The controller 11 receives a setting(s) of a condition(s) about at least one of the learning period, the category information on the learners and the learning range, as a condition(s) for the self-learning results (learning states) to be displayed. The controller 11 can provide information that the user wants to know by extracting the self-learning results that satisfy the condition(s) and causing the display 24 of the terminal device 20 to display the same. For example, narrowing down the learning period to a period before the test was conducted makes it easy to check the correlation between the test results and the self-learning results.

In addition to the first statistical information (learner-by-learner self-learning statistics screen 190), the statistical information includes, as the auxiliary statistical information, at least one of the second statistical information (learner-by-learner test statistics screens 170A, 170B) and the third statistical information (word-by-word test statistics screens 180A, 180B). The controller 11 causes the display 24 of the terminal device 20 to display statistical information selected from the first statistical information and the auxiliary statistical information. This makes it easy to check the correlation between the test results and the self-learning results. For example, a teacher can browse, as the second statistical information, each learner's result of test questions created from the wordbook content. Further, the teacher can change display with a few operations without searching the first statistical information or the auxiliary statistical information, and therefore display of the statistical information by the controller 11 can reduce computer's processing load. By comparing the first statistical information with the second statistical information, the teacher can grasp the correlation between or trend in the students' test results and self-learning results. For example, the teacher can identify the students who have poor test results despite a high amount of self-learning and easily improve his/her lesson contents and teaching method. Further, by checking, as the third statistical information, the number of respondents to each question (word), the number of respondents who have given a correct answer(s) thereto, the percentage of correct answers with respect to each question, and/or the like, the teacher can grasp the learning preference of the students of a class or the like (e.g., they are not good at a particular question or unit) and easily improve his/her lesson contents and teaching method.

The controller 11 causes only the display 24 of the terminal device 20 that is used by an instructor (teacher) to display the statistical information. Thus, the controller 11 can provide a teacher who is to know test results (pieces of performance information) and self-learning results (learning states) of learners with these pieces of information.

Those described in the above embodiment are not limitations but examples of the program, the information processing device, the information processing method and the learning support system according to the present disclosure. The detailed configuration and detailed operation of each component of each device can also be changed as appropriate without departing from the scope of the present disclosure.

For example, in the above embodiment, the controller 11 of the server device 10 causes the display 24 of the terminal device 20 to switch, on the display screen, between the first statistical information (learner-by-learner self-learning statistics screen 190), the second statistical information (learner-by-learner test statistics screens 170A, 170B) and the third statistical information (word-by-word test statistics screens 180A, 180B). Alternatively, the controller 11 may cause the display 24 of the terminal device 20 to display two or more of the first statistical information, the second statistical information and the third statistical information next to one another at the same time. For example, the controller 11 may cause the display 24 of the terminal device 20 to display the statistical information on the test results (pieces of performance information) and the statistical information on the self-learning results (learning states) side by side by dividing the display screen into the left area and the right area. Further, in the above embodiment, a lesson is used as the category information on the learners, but a grade, a class or the like to which the learners belong may be used as the category information on the learners.

Further, in the above embodiment, the controller 11 of the server device 10 performs the performance browsing process only when the user type of the user who is using the terminal device 20 is teacher. However, in addition to this, the controller 11 may permit users who are in a predetermined position, such as in an administrator position, namely, when the user type of the user who is using the terminal device 20 is administrator, to browse the first statistics information (learner-by-learner self-learning statistics screen 190), the second statistics information (learner-by-learner test statistics screens 170A, 170B) and the third statistics information (word-by-word test statistics screens 180A, 180B).

Further, in the above embodiment, the learning support application is provided by the learning support system 100, which includes the server device 10 and the terminal device(s) 20, but not limited thereto. For example, the learning support application may be provided as an application program to be installed on the terminal device 20, and the terminal device 20 may perform various processes by itself. In this case, the information that is stored in the storage 12 of the server device 10 is stored in the storage 22 of the terminal device 20, and the processes that are performed by the controller 11 of the server device 10 are performed by the controller 21 of the terminal device 20. Alternatively, some of the data may be stored in and some of the processes may be performed by the server device 10. For example, the test results may be stored in the storage 12 of the server device 10 and transmitted from the server device 10 to the terminal device 20 in response to a request based on a user operation from the terminal device 20, and the controller 21 of the terminal device 20 may cause the display 24 to display, with respect to each learner, the number of presented questions and the number of correct answers.

Further, the computer-readable storage medium storing the program for executing each process is not limited to the aforementioned examples. Further, carrier waves may be applied as a medium that provides data of the program via communications lines.

## Claims

1. A program causing a computer (11) to:
perform an obtainment process of obtaining pieces of performance information on learners on a test created based on a predetermined learning content, and learning states of the learners about the predetermined learning content; and
perform a display process of causing a display (24) to display statistical information (170A, 170B, 180A, 180B, 190) on the learners about the predetermined learning content based on the pieces of performance information and the learning states.

2. The program according to claim 1,
wherein the learning states of the learners each include a number of questions worked on by each of the learners in the predetermined learning content and a number of correct answers given thereto by the each of the learners, and
wherein in the display process, the display (24) is caused to display, as the statistical information, first statistical information (190) that includes the number of questions worked on by the each of the learners and the number of correct answers given thereto by the each of the learners.

3. The program according to claim 1 or 2,
wherein the display process includes receiving a setting of a first condition that is a condition for the learning states to be displayed, and
wherein the first condition includes a condition about at least one of a learning period, category information on the learners, or a learning range.

4. The program according to claim 2,
wherein in addition to the first statistical information (190), the statistical information includes, as auxiliary statistical information, at least one of second statistical information (170A, 170B) that is the pieces of performance information on the learners or third statistical information (180A, 180B) that includes a number of respondents to each question included in the test and a number of respondents who have given a correct answer thereto, and
wherein in the display process, the display (24) is caused to display statistical information selected from the first statistical information (190) and the auxiliary statistical information (170A, 170B, 180A, 180B).

5. The program according to claim 1 or 2, wherein the display process is performed only on the display (24) of a terminal device (20) that is used by an instructor.

6. An information processing device (10) comprising a processor (11) that obtains pieces of performance information on learners on a test created based on a predetermined learning content, and learning states of the learners about the predetermined learning content, and generates data to cause a display (24) to display statistical information (170A, 170B, 180A, 180B, 190) on the learners about the predetermined learning content based on the pieces of performance information and the learning states.

7. An information processing method comprising:
obtaining pieces of performance information on learners on a test created based on a predetermined learning content, and learning states of the learners about the predetermined learning content (S53, S60, S63); and
generating data to cause a display (24) to display statistical information (170A, 170B, 180A, 180B, 190) on the learners about the predetermined learning content based on the pieces of performance information and the learning states (S54, S57, S61, S64) .

8. A learning support system (100) comprising:
an information processing device (10) including a processor (11); and
a terminal device (20) including a display (24) and connected with the information processing device (10) to perform data communication therewith,
wherein the processor (11) of the information processing device (10) obtains pieces of performance information on learners on a test created based on a predetermined learning content, and learning states of the learners about the predetermined learning content, and generates data to cause the display (24) of the terminal device (20) to display statistical information (170A, 170B, 180A, 180B, 190) on the learners about the predetermined learning content based on the pieces of performance information and the learning states.
